# EUROPÄISCHE PATENTSCHRIFT

(11) **EP 2 340 386 B1**
(45) Veröffentlichungstag und Bekanntmachung des Hinweises auf die Patenterteilung: **29.05.2013**
(21) Anmeldenummer: 09744957.3
(22) Anmeldetag: 22.10.2009
(51) Int. Cl.: F16K 99/00, G05D 23/10

(54) **MIKROVENTIL IN KERAMISCHER MEHRLAGENTECHNIK SOWIE DESSEN VERWENDUNG**
CERAMIC MULTILAYER MICROVALVE AND USE THEREOF
MICRO-SOUPAPE MULTICOUCHES CÉRAMIQUES ET SON UTILISATION

(30) Priorität: 31.10.2008 DE 102008054222
(43) Veröffentlichungstag der Anmeldung: 06.07.2011
(73) Patentinhaber: Fraunhofer-Gesellschaft zur Förderung der angewandten Forschung, 80686 München (DE)
(72) Erfinder: LENZ, Bettina, D-26131 Oldenburg (DE); BROMBERGER, Kolja, D-79114 Freiburg (DE)
(74) Vertreter: Pfenning, Meinig & Partner GbR
(86) Internationale Anmeldenummer: PCT/EP2009/007570
(87) Internationale Veröffentlichungsnummer: WO 2010/049092

(56) Entgegenhaltungen:
- DE-A1- 10 250 758
- US-A- 6 123 316
- US-A1- 2006 017 030
- MCCARTHY M ET AL: "Temperature-Regulated Nonlinear Microvalves for Self-Adaptive MEMS Cooling" JOURNAL OF MICROELECTROMECHANICAL SYSTEMS, IEEE SERVICE CENTER, PISCATAWAY, NJ, US, Bd. 17, Nr. 4, 1. August 2008 (2008-08-01) , Seiten 998-1009, XP011231679 ISSN: 1057-7157 in der Anmeldung erwähnt
- JERMAN H: "Electrically-activated, micromachined diaphragm valves" 19900604; 19900604 - 19900607, 4. Juni 1990 (1990-06-04), Seiten 65-69, XP010000737 in der Anmeldung erwähnt

## Beschreibung

Die vorliegende Erfindung betrifft ein Mikroventil in keramischer Mehrlagentechnik, das eine Regulierung von z.B. Gasströmen in Abhängigkeit der Umgebungstemperatur ermöglicht. Das Ventil nutzt dabei eine temperaturabhängige Deformation eines Bimetalls zur Regulierung der Strömung. Ebenso betrifft die Erfindung eine Mikroventilanordnung mit einer Vielzahl derartiger Mikroventile. Verwendung finden die erfindungsgemäßen Mikroventile zur Regelung von Mikrobrennern, Mikrogeneratoren, Mikroreformern, Mikroreaktoren, Mikrobrennstoffzellen, Kühl- oder Heizsystemen, in der Mikroverfahrenstechnik, in der Mikroenergietechnik und in der Mikroanalytik.

Aus dem Stand der Technik sind Mikroventile bekannt, die einen Bimetallbetätiger aufweisen, der entweder durch die Umgebungswärme oder durch externes Aufheizen verformt wird.

Aus Hal Jerman, Electrically-Activated, Micromachined Diaphragm Valves. IEEE Solid State Sensor and Actuator Workshop, Hilton Head Island, SC, USA, June 4-7 1990, pp 65-69, ist ein bimetallischer Aktor auf Basis von Silicium bekannt. Das Ventil besteht hier aus einer dünnen Schicht Silicium, die in der Mitte eine stempelförmige Struktur aufweist. Darüber ist eine Aluminiumschicht aufgebracht. Im Silicium ist ein Heizdraht eingebaut. Das Stoffpaar Silizium-Aluminium bilden eine bimetallische Struktur mit unterschiedlichen thermischen Ausdehnungskoeffizienten. Bei einer Änderung der Temperatur wird eine Wölbung induziert. Die Temperatur wird mittels Heizdraht elektrisch realisiert.

Aus M. McCathy et al. "Sensors and Actuators" A 134 (2007) 37-46, ist ein bimetallisches Ventil bekannt, das zur Regelung eines Gasstromes (Kühlmedium) in Kühlkonzepten eingesetzt werden kann. Das Ventil wird entsprechend der Umgebungstemperatur geschlossen oder geöffnet. Dadurch kann mehr oder weniger Gas zur Kühlung einer Baugruppe durch das Ventil hindurch treten. Das Ventil weist einen flachen bimetallischen Streifen auf, der auf einem Substrat angebracht ist. Zwischen der Ober- und Unterseite des Substrates liegt eine Druckdifferenz an. Bei geringen Temperaturen ergibt sich eine geringe Wölbung des Bimetalls. In Folge dessen kann ein geringer Gasstrom durch die Öffnung im Substrat strömen. Bei hohen Temperaturen wird die Wölbung und entsprechend der Gasstrom vergrößert. Die Temperierung geschieht nicht elektrisch, sondern über einen Wärmestrom von der Umgebung durch das Substrat hin zum Bimetall.

Aus EP 0 942 213 A2 ist ein bimetallisches Ventil bekannt, das als Betätiger einen zweischenkligen Ausleger aus Federblech aufweist. Einer der Schenkel liegt hierbei an einem Heizelement an. Durch Heizen dieses Schenkels mit Hilfe des Heizelements wird der Ausleger verformt und öffnet das Ventil. Es handelt sich hierbei um ein elektrisch betätigtes Kleinventil.

Die DE 102 50 758 A1 beschreibt ein thermomechanisches Mikroventil in Leiterplattentechnologie, das bei jedem Schaltvorgang sowohl einen Fluidkanal als auch einen elektrischen Kontakt öffnet bzw. schließt. Dessen Aufbau ist gekennzeichnet durch den Einsatz eines Schnappelementes in einem Hohlraum eines Leiterplattensystems mit fluidischen und elektrischen Anschlüssen. Das Schnappelement wird mit Hilfe von Widerständen oder Metallstrukturen beheizt, um dadurch einen Umschnappvorgang auszulösen. Es erfolgt so eine kombinierte Nutzung der Bimetallscheibe als thermomechanischer Ventilaktor und elektrischer Schalter zur Zustandsrückmeldung.

Ausgehend hiervon war es Aufgabe der vorliegenden Erfindung, ein Mikroventil bereitzustellen, das autonom, d.h. ohne Zufuhr elektrischer Energie, betrieben werden kann und eine kompakte Bauweise erlaubt.

Diese Aufgabe wird durch das Mikroventil mit den Merkmalen des Anspruchs 1 und die Mikroventilanordnung mit den Merkmalen des Anspruchs 13 gelöst. Die weiteren abhängigen Ansprüche zeigen vorteilhafte Weiterbildungen auf. In Anspruch 16 werden erfindungsgemäße Verwendungen aufgeführt.

Erfindungsgemäß wird ein Mikroventil in keramischer Mehrlagentechnik bereitgestellt, das zumindest eine obere Lage, eine untere Lage sowie eine zwischen diesen angeordnete mittlere Lage aufweist. Alle Lagen weise jeweils Ausnehmungen auf, wobei in der Ausnehmung der mittleren Lage mindestens ein Bimetallstreifen bereichsweise angeordnet ist. Die Breite des Bimetallstreifens ist dabei so gewählt ist, dass zumindest eine der Ausnehmungen in der oberen bzw. unteren Lage durch eine thermisch induzierte Deformation des Bimetallstreifens gasdicht verschlossen wird.

Das erfindungsgemäße Mikroventil unterscheidet sich von den aus dem Stand der Technik bekannten Lösungen dadurch, dass keine elektrische Beheizung notwendig ist, um eine Auslenkung des Bimetalls zu erreichen. Weiterhin wird erfindungsgemäß ein anderes geometrisches Konzept verfolgt, in dem die LTCC- bzw. HTCC-Bauweise zum Einsatz kommt, während im Stand der Technik Systeme aus Silizium und Aluminium eingesetzt werden.

Das erfindungsgemäße Mikroventil weist dabei folgende Vorteile auf:
- Für den Betrieb des Ventils ist keine elektrische Hilfsenergie erforderlich, wodurch der Gesamtwirkungsgrad des Systems erhöht werden kann.
- Mit dem erfindungsgemäßen System entfällt die Notwendigkeit, die zu regelnde Temperatur über ein Thermoelement zu messen, ebenso wie die Übergabe des Messsignals an einen Mikro-Controller und die Übermittlung des Stellsignals an das Ventil. Somit kann eine Vielzahl von Prozessschritten für den Betrieb des Mikroventils eingespart werden. Ebenso entfallen Komponenten, wie Messfühler und Mikro-Controller.
- Das erfindungsgemäße Mikroventil erlaubt eine integrierte Herstellung mittels HTCC/LTCC. Dies ermöglicht eine Massenproduktion mit den damit verbundenen Kostenvorteilen. Ebenso zeichnet sich das erfindungsgemäße Mikroventil durch eine sehr kompakte Bauweise aus.
- Die Abwärme des zu regelnden Prozesses wird direkt und unmittelbar durch das erfindungsgemäße Mikroventil genutzt.

Vorzugsweise nimmt der Bimetallstreifen durch Wärmeleitung Wärmeenergie aus den umgebenden Lagen auf und steht somit in direktem thermischen Kontakt mit der Umgebung des Mikroventils.

Eine weitere bevorzugte Ausführungsform sieht vor, dass die Breite des Bimetallstreifens geringer als die Breite der Ausnehmung in der mittleren Lage ist, so dass im geöffneten Zustand des Mikroventils ein Fluid, insbesondere ein Gas, seitlich an dem Bimetallstreifen vorbeiströmen kann.

Das Mikroventil wird vorzugsweise in HTCC- und/oder LTCC-Technik gefertigt.

Es ist weiterhin bevorzugt, dass die Materialien, aus denen der Bimetallstreifen besteht, auf die für die Regelung des Ventils erforderlichen Temperaturbedingungen abgestimmt sind. Der Bimetallstreifen besteht aus bzw. enthält dabei vorzugsweise Materialkombinationen ausgewählt aus der Gruppe bestehend aus Polymerwerkstoffen, Halbmetallen und Metallen und deren Kombinationen. Beispielsweise können Goldlegierungen, Silberlegierungen, Silber-Metalloxid, Sonderlegierungen (AlSi), Bronzelegierungen, Messinglegierungen und Kombinationen hiervon, zum Einsatz kommen.

Eine erste erfindungsgemäße Variante sieht vor, dass bei einem ersten definierten Sollwert der Bimetallstreifen eine Wölbung aufweist und dadurch der Bimetallstreifen an den Rändern oder Kanten der Ausnehmungen in der oberen oder unteren Lage aufliegt und so die Ausnehmung in der oberen oder unteren Lage verschließt und bei einem zweiten Sollwert der Bimetallstreifen in die planare Ausgangsform zurückkehrt und dadurch die Ausnehmungen in der oberen oder unteren Lage nicht mehr verschlossen sind.

Eine zweite erfindungsgemäße Variante sieht vor, dass bei einem ersten definierten Sollwert der Bimetallstreifen eine geringere Wölbung aufweist und dadurch der Bimetallstreifen an den Rändern oder Kanten der Ausnehmung in der oberen oder unteren Lage planar aufliegt und so die Ausnehmung in der oberen oder unteren Lage verschließt und bei einem zweiten Sollwert der Bimetallstreifen in die gewölbte Ausgangsform zurückkehrt und dadurch die Ausnehmungen in der oberen oder unteren Lage nicht mehr verschlossen sind.

Erfindungsgemäß wird ebenso eine Mikroventilanordnung bereitgestellt, die mindestens ein Mikroventil, wie es zuvor beschrieben wurde, aufweist, wobei die Mikroventile in Reihe, parallel oder in einer Matrix angeordnet sind und die Bimetallstreifen der einzelnen Mikroventile zumindest teilweise aus unterschiedlichen Materialien bestehen, so dass die einzelnen Mikroventile bei unterschiedlichen Temperaturen schließen und öffnen.

Erfindungsgemäß wird ebenso eine Mikroventilanordnung bereitgestellt, wobei die Mikroventile in Reihe, parallel oder in einer Matrix angeordnet sind und die Bimetallstreifen der einzelnen Mikroventile aus den gleichen Materialien bestehen, so dass alle Mikroventile gleichartig bei definierten Temperaturen schließen und öffnen.

Hierbei ist es bevorzugt, dass die Mikroventilanordnung an der Gaseintrittsfläche eine Lage mit mindestens einer Gaseintrittsöffnung und an der Gasaustrittsfläche eine Lage mit mindestens einer Gasaustrittsöffnung aufweist.

Verwendung finden die erfindungsgemäßen Mikroventile bzw. Mikroventilanordnungen zur Regelung von Mikrobrennern, Mikrogeneratoren, Mikroreformern, Mikroreaktoren, Mikrobrennstoffzellen, Kühl- oder Heizsystemen, in der Mikroverfahrenstechnik, in der Mikroenergietechnik und in der Mikroanalytik.

Anhand der nachfolgenden Figuren soll der erfindungsgemäße Gegenstand näher erläutert werden, ohne diesen auf die hier gezeigten speziellen Ausführungsformen einschränken zu wollen.
F ig. 1 zeigt ein erfindungsgemäßes Mikroventil.
F ig. 2 zeigt eine erfindungsgemäße Mikroventilanordnung.

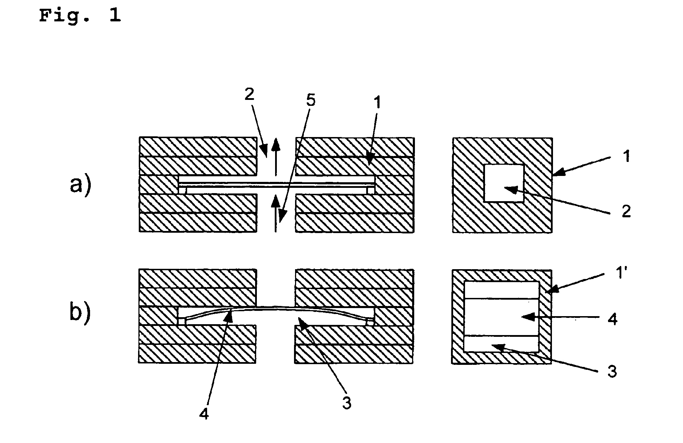

Das erfindungsgemäße Mikroventil kann in den Formen "normal offen" oder "normal geschlossen" ausgeführt werden. Fig. 1 zeigt das Ventil in der Variante "normal offen". Die Auslegung des Ventils muss dabei in enger Abstimmung mit der zu regelnden Baugruppe erfolgen. D.h. das Mikroventil muss in enger örtlicher Nähe zu der zu regelnden Baugruppe liegen. Die Materialien des Bimetalls müssen auf die Betriebstemperatur der zu regelnden Baugruppe angepasst werden.

Das Ventil besteht aus mehreren Lagen HTCC bzw. LTCC 1. In der mittleren Ebene des Mikroventils befindet sich ein bimetallisches Diaphragma 4. Die oberen und unteren Ebenen weisen eine kleine Öffnung 2,5 auf, durch die der Gasstrom hindurchströmen kann. Die mittlere Ebene weist eine größere Öffnung 3 auf, die nicht vollständig von dem Bimetall 4 bedeckt wird. Dadurch kann der Gasstrom seitlich um das Bimetall herumströmen, wenn das Mikroventil geöffnet ist. Ist das Ventil geschlossen, stößt das Bimetall an die HTCC/LTCC-Ebene mit der kleineren Öffnung 2,5 und verschließt diese.

In Abhängigkeit der Umgebungstemperatur ist das Bimetall entweder planar oder gewölbt. Das Diaphragma nimmt durch Wärmeleitung Wärmeenergie vom Wandmaterial auf und steht damit in direktem thermischen Kontakt zur Umgebung. Übersteigt die Umgebungstemperatur einen Sollwert, so wölbt sich das bimetallische Diaphragma und schließt die obere Öffnung. Das Ventil ist geschlossen. Unterschreitet die Umgebungstemperatur einen Sollwert, so nimmt das Diaphragma die planare Form an. Das Ventil ist geöffnet.

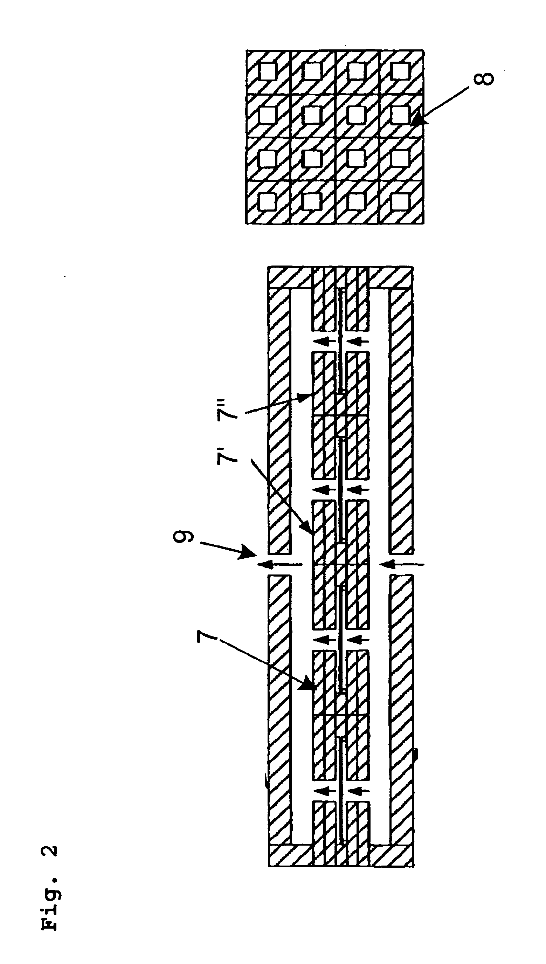

Durch Parallelschaltung kann der zu regelnde Volumenstrom einfach an die jeweilige Situation angepasst werden. Fig. 2 zeigt hierzu eine mögliche Anordnung. Die in einer Matrix 8 angeordneten einzelnen Mikroventile 7, 7', 7" werden mit einer gemeinsamen Anströmung 9 am Ein- und Auslass versehen.

## Patentansprüche

1. Mikroventil in keramischer Mehrlagentechnik enthaltend zumindest eine obere Lage (1) mit einer Ausnehmung (2), eine untere Lage mit einer Ausnehmung (5) und einer zwischen der oberen und der unteren Lage angeordnete mittlere Lage (1') mit einer Ausnehmung (3), in der mindestens ein Bimetallstreifen (4) bereichsweise angeordnet ist, wobei die Breite des Bimetallstreifens so gewählt ist, dass zumindest eine der Ausnehmungen (2,5) durch eine thermisch induzierte Deformation des Bimetallstreifens gasdicht verschlossen wird.

2. Mikroventil nach Anspruch 1,
**dadurch gekennzeichnet, dass** der Bimetallstreifen durch Wärmeleitung Wärmeenergie aus den umgebenden Lagen (1,1') aufnimmt und so in direktem thermischen Kontakt mit der Umgebung des Mikroventils steht.

3. Mikroventil nach einem der vorhergehenden Ansprüche,
**dadurch gekennzeichnet, dass** die Breite des Bimetallstreifens geringer als die Breite der Ausnehmung (3) ist, so dass im geöffneten Zustand des Mikroventils ein Fluid, insbesondere ein Gas, seitlich an dem Bimetallstreifen vorbeiströmt.

4. Mikroventil nach einem der vorhergehenden Ansprüche,
**dadurch gekennzeichnet, dass** das Mikroventil in HTCC- und/oder LTCC-Technik gefertigt ist.

5. Mikroventil nach einem der vorhergehenden Ansprüche,
**dadurch gekennzeichnet, dass** die Materialien, aus denen der Bimetallstreifen besteht, auf die für die Regelung des Ventils erforderlichen Temperaturbedingungen abgestimmt sind.

6. Mikroventil nach einem der vorhergehenden Ansprüche,
**dadurch gekennzeichnet, dass** der Bimetallstreifen aus Materialkombinationen ausgewählt aus der Gruppe bestehend aus Polymerwerkstoffen, Halbmetallen und Metallen, insbesondere Goldlegierungen, Silberlegierungen, Silber-Metalloxid, Sonderlegierungen (AlSi), Bronzelegierungen und Messinglegierungen und Kombinationen hiervon, besteht oder diese enthält.

7. Mikroventil nach einem der vorhergehenden Ansprüche,
**dadurch gekennzeichnet, dass** der Bimetallstreifen im Ausgangszustand im wesentlichen planar ist.

8. Mikroventil nach einem der vorhergehenden Ansprüche,
**dadurch gekennzeichnet, dass** der Bimetallstreifen im Ausgangszustand im wesentlichen gewölbt ist.

9. Mikroventil nach einem der vorhergehenden Ansprüche,
**dadurch gekennzeichnet, dass** bei einem ersten definierten Sollwert der Bimetallstreifen eine Wölbung aufweist und dadurch der Bimetallstreifen an den Rändern oder Kanten der Ausnehmungen in der oberen oder unteren Lage aufliegt und so die Ausnehmung in der oberen oder unteren Lage verschließt und bei einem zweiten Sollwert der Bimetallstreifen in die planare Ausgangsform zurückkehrt und dadurch die Ausnehmungen in der oberen oder unteren Lage nicht mehr verschlossen sind.

10. Mikroventil nach einem der vorhergehenden Ansprüche,
**dadurch gekennzeichnet, dass** bei einem ersten definierten Sollwert der Bimetallstreifen eine geringere Wölbung aufweist und dadurch der Bimetallstreifen an den Rändern oder Kanten der Ausnehmung in der oberen oder unteren Lage planar aufliegt und so die Ausnehmung in der oberen oder unteren Lage verschließt und bei einem zweiten Sollwert der Bimetallstreifen in die gewölbte Ausgangsform zurückkehrt und dadurch die Ausnehmungen in der oberen oder unteren Lage nicht mehr verschlossen sind.

11. Mikroventil nach einem der vorhergehenden Ansprüche,
**dadurch gekennzeichnet, dass** das Mikroventil ohne elektrische Energiezufuhr zu betreiben ist.

12. Mikroventil nach einem der vorhergehenden Ansprüche,
**dadurch gekennzeichnet, dass** das Mikroventil mit elektrischer Energiezufuhr zu betreiben ist, insbesondere durch regelbares Temperieren des Bimetallstreifens über einen elektrischen Heizwiderstand.

13. Mikroventilanordnung enthaltend mindestens ein Mikroventil nach einem der vorhergehenden Ansprüche, wobei die Mikroventile in Reihe, parallel oder in einer Matrix angeordnet sind und die Bimetallstreifen der einzelnen Mikroventile zumindest teilweise aus unterschiedlichen Materialien bestehen, so dass die einzelnen Mikroventile bei unterschiedlichen Temperaturen schließen und öffnen.

14. Mikroventilanordnung enthaltend mindestens ein Mikroventil nach einem der Ansprüche 1-12, **dadurch gekennzeichnet, dass** die Mikroventile in Reihe, parallel oder in einer Matrix angeordnet sind und die Bimetallstreifen der einzelnen Mikroventile aus den gleichen Materialien bestehen, so dass alle Mikroventile gleichartig bei definierten Temperaturen schließen und öffnen.

15. Mikroventilanordnung nach Anspruch 13 oder 14, **dadurch gekennzeichnet, dass** die Mikroventilanordnung an der Gaseintrittsfläche eine Lage mit mindestens einer Gaseintrittsöffnung und an der Gasaustrittsfläche eine Lage mit mindestens einer Gasaustrittsöffnung aufweist.

16. Verwendung des Mikroventils nach einem der Ansprüche 1 bis 12 oder der Mikroventilanordnung nach einem der Ansprüche 13 bis 15 zur Regelung von Mikrobrennern, Mikrogeneratoren, Mikroreformern, Mikroreaktoren, Mikrobrennstoffzellen, Kühl- oder Heizsystemen, in der Mikroverfahrenstechnik, in der Mikroenergietechnik und in der Mikroanalytik.

## Claims

1. A micro valve in ceramic multilayer technology, containing at least an upper layer (1) with a cutout (2), a lower layer with a cutout (5) and a middle layer (1') arranged between the upper and the lower layer with a cutout (3), in which at least one bimetallic strip (4) is arranged in regions, the width of the bimetallic strip being selected such that at least one of the cutouts (2, 5) is closed in gastight manner by a thermally-induced deformation of the bimetallic strip.

2. A micro valve according to Claim 1, **characterised in that** the bimetallic strip absorbs thermal energy from the surrounding layers (1, 1') by thermal conduction and thus is in direct thermal contact with the surroundings of the micro valve.

3. A micro valve according to one of the preceding claims, **characterised in that** the width of the bimetallic strip is less than the width of the cutout (3), so that in the opened state of the micro valve a fluid, in particular a gas, flows laterally past the bimetallic strip.

4. A micro valve according to one of the preceding claims, **characterised in that** the micro valve is manufactured using HTCC and/or LTCC technology.

5. A micro valve according to one of the preceding claims, **characterised in that** the materials of which the bimetallic strip consists are matched to the temperature conditions necessary for controlling the valve.

6. A micro valve according to one of the preceding claims, **characterised in that** the bimetallic strip consists of or contains material combinations selected from the group consisting of polymer materials, semimetals and metals, in particular gold alloys, silver alloys, silver-metal oxide, special alloys (AlSi), bronze alloys and brass alloys and combinations thereof.

7. A micro valve according to one of the preceding claims, **characterised in that** the bimetallic strip is substantially planar in the initial state.

8. A micro valve according to one of the preceding claims, **characterised in that** the bimetallic strip is substantially curved in the initial state.

9. A micro valve according to one of the preceding claims, **characterised in that** at a first defined desired value the bimetallic strip has a curvature and as a result the bimetallic strip lies against the margins or edges of the cutouts in the upper or lower layer and thus closes the cutout in the upper or lower layer, and at a second desired value the bimetallic strip returns to the planar starting form and as a result the cutouts in the upper or lower layer are no longer closed.

10. A micro valve according to one of the preceding claims, **characterised in that** at a first defined desired value the bimetallic strip has a lesser curvature and as a result the bimetallic strip lies against the margins or edges of the cutouts in the upper or lower layer in planar manner and thus closes the cutout in the upper or lower layer, and at a second desired value the bimetallic strip returns to the curved starting form and as a result the cutouts in the upper or lower layer are no longer closed.

11. A micro valve according to one of the preceding claims, **characterised in that** the micro valve is operated without electrical energy input.

12. A micro valve according to one of the preceding claims, **characterised in that** the micro valve is operated with electrical energy input, in particular by controllable temperature adjustment of the bimetallic strip via an electric heating resistor.

13. A micro valve arrangement containing at least one micro valve according to one of the preceding claims, the micro valves being arranged in series, in parallel or in a matrix, and the bimetallic strips of the individual micro valves consisting at least partially of different materials, so that the individual micro valves close and open at different temperatures.

14. A micro valve arrangement containing at least one micro valve according to one of Claims 1 - 12, **characterised in that** the micro valves are arranged in series, in parallel or in a matrix, and the bimetallic strips of the individual micro valves consist of the same materials, so that all the micro valves close and open in the same way at defined temperatures.

15. A micro valve arrangement according to Claim 13 or 14, **characterised in that** the micro valve arrangement on the gas entry surface has a layer with at least one gas entry opening, and on the gas exit surface a layer with at least one gas exit opening.

16. Use of the micro valve according to one of Claims 1 to 12 or of the micro valve arrangement according to one of Claims 13 to 15 for controlling microbumers, microgenerators, microreformers, microreactors, micro fuel cells, cooling or heating systems, in micro process engineering, in micro power engineering and in microanalytics.

## Revendications

1. Microvanne en technique de céramique multicouche comprenant au moins une couche supérieure (1) avec un évidement (2), une couche inférieure avec un évidement (5) et une couche centrale (1'), agencée entre la couche supérieure et la couche inférieure, avec un évidement (3), dans lequel est agencé, sur une zone, au moins un bilame (4), dans laquelle la largeur du bilame est choisie de façon à ce qu'au moins un des évidements (2, 5) soit obturé de manière étanche aux gaz par une déformation induite thermiquement du bilame.

2. Microvanne selon la revendication 1, **caractérisée en ce que** le bilame absorbe, par conduction thermique, l'énergie thermique provenant des couches (1, 1') environnantes et se trouve ainsi en contact thermique direct avec l'environnement de la microvanne.

3. Microvanne selon l'une des revendications précédentes, **caractérisée en ce que** la largeur du bilame est inférieure à la largeur de l'évidement (3), de façon à ce que, lorsque la microvanne est ouverte, un fluide, plus particulièrement un gaz, passe latéralement le long du bilame.

4. Microvanne selon l'une des revendications précédentes, **caractérisée en ce que** la microvanne est fabriquée à l'aide de la technique HTCC (céramique cofrittée à haute température) et/ou LTCC (céramique cofrittée à basse température).

5. Microvanne selon l'une des revendications précédentes, **caractérisée en ce que** les matériaux dont est constitué le bilame sont adaptés aux conditions de température nécessaires pour la commande de la vanne.

6. Microvanne selon l'une des revendications précédentes, **caractérisée en ce que** le bilame est constitué de combinaisons de matériaux sélectionnées dans le groupe constitué de matériaux polymères, de semi-métaux et de métaux, plus particulièrement d'alliages d'or, d'alliages d'argent, d'oxydes métalliques d'argent, d'alliages spéciaux (AlSi), d'alliages de bronze et d'alliages de laiton et de combinaisons de ceux-ci, ou contient ces combinaisons.

7. Microvanne selon l'une des revendications précédentes, **caractérisée en ce que** le bilame est sensiblement plan dans l'état initial.

8. Microvanne selon l'une des revendications précédentes, **caractérisée en ce que** le bilame est sensiblement bombé dans l'état initial.

9. Microvanne selon l'une des revendications précédentes, **caractérisée en ce que** pour une première valeur de consigne définie, le bilame présente un bombement et de ce fait le bilame repose contre les bords ou les arêtes des évidements dans la couche supérieure ou inférieure et obture ainsi l'évidement dans la couche supérieure ou inférieure, et pour une deuxième valeur de consigne, le bilame revient à la forme initiale plane et de ce fait les évidements dans la couche supérieure ou inférieure ne sont plus obturés.

10. Microvanne selon l'une des revendications précédentes, **caractérisée en ce que** pour une première valeur de consigne définie, le bilame présente un bombement plus faible et de ce fait le bilame repose de manière plane contre les bords ou les arêtes des évidements dans la couche supérieure ou inférieure et obture ainsi l'évidement de la couche supérieure ou inférieure, et pour une deuxième valeur de consigne, le bilame revient à la forme initiale bombée et de ce fait les évidements de la couche supérieure ou inférieure ne sont plus obturés.

11. Microvanne selon l'une des revendications précédentes, **caractérisée en ce que** la microvanne doit être opérée sans alimentation électrique.

12. Microvanne selon l'une des revendications précédentes, **caractérisée en ce que** la microvanne doit être opérée avec une alimentation électrique, en particulier grâce à un équilibrage de la température régulable du bilame via une résistance chauffante électrique.

13. Agencement de microvanne comprenant au moins une microvanne selon l'une des revendications précédentes, dans lequel les microvannes sont agencées en série, en parallèle ou dans une matrice et les bilames des différentes microvannes sont constitués au moins partiellement de matériaux différents, de telle sorte que les différentes microvannes s'ouvrent et se ferment à des températures différentes.

14. Agencement de microvanne comprenant au moins une microvanne selon l'une des revendications 1 à 12, **caractérisé en ce que** les microvannes sont agencées en série, en parallèle ou dans une matrice et les bilames des différentes microvannes sont constitués des mêmes matériaux, de telle sorte que toutes les microvannes s'ouvrent et se ferment de la même manière à des températures définies.

15. Agencement de microvanne selon la revendication 13 ou 14, **caractérisé en ce que** l'agencement de microvanne présente, sur la surface d'entrée du gaz, une couche avec au moins une ouverture d'entrée du gaz, et sur la surface de sortie du gaz, une couche avec au moins une ouverture de sortie du gaz.

16. Utilisation de la microvanne selon l'une des revendications 1 à 12 ou de l'agencement de microvanne selon l'une des revendications 13 à 15 pour la régulation de micro-brûleurs, de micro-générateurs, de micro-reformeurs, de micro-réacteurs, de microcellules de combustible, de systèmes de refroidissement ou de chauffage, dans la technologie des micro-procédés, dans la technologie de la micro-énergie et dans la micro-analytique.
